# EUROPEAN PATENT SPECIFICATION

(11) **EP 0 355 399 B1**
(45) Date of publication and mention of the grant of the patent: **02.03.1994**
(21) Application number: 89113264.9
(22) Date of filing: 19.07.1989
(51) Int. Cl.: A23J 3/00

(54) **Selective enzymatic degradation of beta-lactoglobulin contained in cow's milk-serum protein**
Selektive enzymatische Zersetzung von beta-Lactoglobulin in Molkeeiweiss von Kuhmilch
Dégradation enzymatique sélective de la bêta-lactoglobuline du lactosérum de lait de vache

(30) Priority: 20.07.1988 JP 179149/88; 22.06.1989 JP 158252/89
(43) Date of publication of application: 28.02.1990
(73) Proprietor: MEIJI MILK PRODUCTS COMPANY LIMITED, Tokyo 104 (JP)
(72) Inventor: Kaneko, Tetsuo, Iruma-shi Saitama-ken (JP); Kojima, Tadashi, Higashiyamato- shi Tokyo (JP); Kuwata, Tamotsu, Tokorozawa-shi Saitama-ken (JP); Yamamoto, Yoshiro, Higashimurayama-shi Tokyo (JP)
(74) Representative: Thomsen, Dieter, Dr.

(56) References cited:
- EP-A- 0 022 019
- EP-A- 0 087 247
- EP-A- 0 321 603
- JOURNAL OF FOOD SCIENCE, vol. 53, no. 4, July/August 1988, pages 1208-1211; J. ASSELIN et al.: "Immunogenicity and allergenicity of whey protein hydrolysates"
- PATENT ABSTRACTS OF JAPAN, vol. 10, no. 276 (C-373)[2332], 19th September 1986; & JP-A-61 96 956 (SNOW BRAND MILK PROD. CO. LTD) 15-05-1986
- DERWENT, no. 88-128952 [19], Derwent Publications Ltd, London, GB; & JP-A-63 071 197 (TOYOBO K.K.) 31-03-1988

## Description

The invention relates to a method of selectively degrading β-lactoglobulin contained in cow's milk-serum protein by using a specific enzyme capable of selectively degrading β-lactoglobulin while not degrading other milk proteins.

β-lactoglobulin (hereinafter abbreviated as β-Lg), which is scarcely found in human milk, often acts as a Powerful allergen to infants. The cow's milk-serum protein which is freed from β-Lg by the method of this invention can be used as a protein source for the preparation of infant-nursing foods having a low allergenic action.

In the manufacture of powdered milk preparations for infant nursing, efforts are generally made to make the protein composition of cow's milk as similar as possible to that of human milk. The greatest difference between cow's milk and human milk is that β-Lg which is contained in a large amount in the former is scarcely found in the latter.

In order to make the protein composition of cow's milk similar to that of human milk, a method has been proposed in which part of casein is replaced by milk serum. This method, however, has brought about no substantial improvement, because other components not found in human milk become incorporated and the absolute amount of β-Lg cannot be diminished.
Another method is known in which ferric chloride in an amount in a specific range is added to milk serum or its protein concentrate at a pH and a temperature in specific ranges, thereby isolating milk-serum protein with diminished β-Lg as precipitate (JP Patent publication 113848/1984); furthermore a method is known in which milk serum or its protein concentrate is treated with ferric chloride in an amount in a specific range different from the above at a pH and a temperature in specific ranges different from the above, thereby isolating protein with diminished β-Lg as supernatant (JP publication 268131/1986); and a method in which milk serum or its protein concentrate is desalted, adjusted to a pH in a specific range and heated at a temperature in a specific range, thereby isolating protein with diminished β-Lg as precipitate (JP publication 268138/1986).

These precipitation methods with ferric chloride are of little utility because milk-serum protein contains β-Lg in an amount as large as about 50% and hence the other types of protein components are also removed by the precipitation in considerable quantities.

On the other hand, the method of removing β-Lg as soluble fraction by heating milk serum or its protein concentrate after desalting has the problem that nonprotein nitrogenous compounds which are important nutrients, such as urea and glycomacropeptides, are also lost.

As techniques to diminish allergen by treatment with a protease, have been proposed a method in which a mixture of disrupted cells of a lactic acid bacterium, pancreatin and a protease obtained from a filamentous fungus belonging to the genus Aspergillus is allowed to act upon milk protein at a temperature in a specific range, and the reaction is terminated when a predetermined amount of amino compounds are released, thus giving protein degradation products free from antigens (JP Patent publication 36235/1979); and a method in which pancreatin and a protease derived from a microorganism belonging to the genus Bacillus are allowed to act upon milk protein, thereby giving milk protein degradation products which are free from antigens and are readily soluble in water (JP Patent publication 171644/1987).

These methods have the problems that, because all the protein is degraded into amino acids or oligopeptides, the final product has disagreeable taste and bitterness owing to the degradation products, thus lowering its value as food, and lacks the important functions as protein.

Furthermore EP 22 019-A1 discloses a method according to which β-Lg is faster hydrolyzed than α-lactalbumin and serum albumin, thus receiving a total enzymatic hydrolysate from whey protein, comprising peptides and capable of direct assimilation by the intestinal mucous membrane; the product contains no residual proteins; at least 50% of the peptides contain 2 to 5 amino acids; and the amount of free amino acids is less than 15%; the corresponding process for obtaining such a hydrolysate works in that a whey protein concentrate is subjected to a continuous enzymatic hydrolysis with a proteolytic enzyme capable of simulating proteic digestion which takes place in vivo in the human body, by introducing said concentrate in a reaction zone with the enzyme, the reaction product is continuously drawn off by conducting it from the reaction zone in an ultrafiltration zone, from which a permeate is also continuously drawn off, which represents the peptidic hydrolysate constituting the desired product, the hydrolysis reaction being conducted until the product contains no more residual proteins, i.e. has no nitrogen precipitable by 12% trichloroacetic acid and until peptidic hydrolysate is obtained, at least 50% of the peptides of which contain 2 to 5 amino acids, a recycling step eventually being forseen from the ultrafiltration to the reaction zone. According to this EP 22 019-A1 the reaction is continued until nitrogen, precipitable by trichloroacetic acid as mentioned, is no longer present, and a specific peptidic hydrolysate with 2 to 5 amino acids is obtained and the amount of free amino acids is less than 15%; as can be seen from fig. 3 of EP 22 019-A1, embodiment "7 min", β-Lg is not degraded completely whereas the embodiment "70 min" demonstrates that α-lactalbumin is also completely degraded as well as β-Lg.

Thus the object of the present invention is to establish a method of selectively degrading β-Lg contained in milk-serum protein in an amount as large as about 50%, thereby providing an allergen-free food material for nursing infants.

According to the invention this object is solved by the main claim, i.e. a method of selectively degrading β-lactoglobulin contained in cow's milk-serum protein while not degrading other milk proteins, comprising adding a protease which is at least one member selected from the group consisting of proteases derived from filamentous fungi belonging to the genus Aspergillus, Bacillus subtilis and actinomyces, and trypsin and α-chymotrypsin, the enzymatic reaction being continued until the degradation of the β-lactoglobulin is complete and being discontinued prior to the time that degradation of other milk proteins commences, wherein the enzymatic reaction is continued at from 30 to 40°C for from 0.5 to 20 hours in the pH range of from 7 to 9.

A particular embodiment of the invention is described in claim 2, i.e. a method wherein the degradation of β-lactoglobulin continues to an extent corresponding to a release of amino compounds soluble in 10% trichloroacetic acid which reaches an amount corresponding to 220 mg of glycine per g of substrate protein when the protease derived from a filamentous fungus of Aspergillus, Bacillus subtilis or Streptomyces griseus is used, and an amount corresponding to 120 mg of glycine when trypsin or α-chymotrypsin is used.

Furthermore the invention is illustrated by the drawings wherein:
Figure 1 shows SDS-polyacrylamide gel electrophoretic patterns of milk serum protein degraded by commercial proteases;
Figure 2 shows SDS-polyacrylamide gel electrophoretic patterns of milk-serum protein treated with Neutrase (neutral protease derived from Bacillus subtilis);
Figure 3 shows SDS-polyacrylamide gel electrophoretic patterns after the enzymatic reactions of Figure 1 are continued for 24 hours;
Figure 4 shows SDS-polyacrylamide gel electrophoretic patterns of milk-serum protein treated with a protease derived from Streptomyces griseus;
Figure 5 is a degradation curve observed when milk serum is treated with bovine trypsin for 0 to 90 minutes (Example 4);
Figure 6 shows SDS-polyacrylamide gel electrophoretic patterns of milk-serum protein during degradation (Example 4);
Figure 7 shows HPLC patterns of the reaction mixture and unreacted mixture in Example 5 [(a): unreacted mixture; (b): reaction mixture];
Figures 8 and 9 show bluing spots developed on the back skin of rats by the PCA test using the reaction mixture and unreacted mixture in Example 6 ( Figure 8: unreacted mixture; Figure 9: reaction mixture );
Figure 10 shows bluing spots developed on the back skin of rats by the neutralization PCA test (Example 7); in which mouse anti-α-La serum is added to each of the reaction mixture, the unreacted mixture and PBS (Phosphate Buffered Saline), and the neutralized solutions thus obtained are intradermally injected to the back of rats, followed by intravenous injection of α-La after 24 h sensitization period;
Figure 11 shows bluing spots developed on the back skin of rats by the neutralization PCA test ( Example 7 ), in which mouse anti-β-Lg serum is added to each of the reaction mixture, the unreacted mixture and PBS, and the neutralized solutions thus obtained are intradermally injected to the back of rats, followed by intravenous injection of β-Lg after 24 h sensitization period.
Meaning of abbreviations:
- α-La:: α-Lactalbumin
- β-Lg:: β-Lactoglobulin
- BSA:: Bovine serum albumin
- Lf:: Lactoferrine
- Ig:: Immunoglobulin
In detail, the present invention uses enzymatic methods for selectively degrading β-Lg in cow's milk-serum protein under specific conditions, i.e. a protease of microbial origin, such as protease derived from filamentous fungi belonging to the genus Aspergillus, those derived from Bacillus subtilis and those derived from actinomyces, or a protease of animal origin, such as trypsin and α-chymotrypsin.

From the a.m. JP Patent publication 36235/1979 a method of degrading milk-serum protein by using a protease derived from a filamentous fungus belonging to the genus Aspergillus is known. However, only few examples are known in which ease of degradation for individual components in the milk-serum protein system is indeed investigated. There is no example at all in which only β-Lg is selectively degraded by specific proteases.

According to the invention, a protease derived from a filamentous fungus belonging to the genus Aspergillus, a protease derived from Bacillus subtilis, a protease derived from Streptomyces griseus, trypsin or α-chymotrypsin is added to an aqueous solution of cow's milk-serum protein, and the mixture is held at a pH in the range of 7 to 9 and a temperature in the range of 30 to 40°C for 0.5 to 20 hours. This proteolytic treatment should be continued until amino compounds soluble in 10% trichloroacetic acid ( hereinafter abbreviated as 10%-TCA ) are released in an amount corresponding to 220 mg glycine per g of substrate protein when the protease derived from a filamentous fungus of Aspergillus, Bacillus subtilis or Streptomyces griseus is used, and in an amount corresponding to 120 mg glycine when trypsin or α-chymotrypsin is used.

The selective degradation of β-Lg contained in milk-serum protein is an advantageous action of the protease derived from a filamentous fungus of Aspergillus, the protease derived from Bacillus subtilis, the protease derived from Streptomyces griseus, trypsin and α-chymotrypsin. These effects are not attained with other proteases showing the highest activity in the acidic region.

The SDS-polyacrylamide gel electrophoresis used in the method of this invention is the Laemmli's modification ( Laemmli, U.K., 1970, Cleavage of Structural Proteins during the Assembly of the Head of Bacteriophage T4, Nature, 227:680 ). Its operating conditions are as shown below.

### 1. Gel composition ( gel thickness: 1 mm )

### 1-1. Concentrating gel

Acrylamide concentration: 4%
Bisacrylamide:Acrylamide = 1:10
Gel buffer: 0.125M Tris-HCl buffer containing 0.1% sodium dodecyl sulfate and 6M urea ( pH 6.8 )
TEMED concentration: 0.125%
Ammonium persulfate concentration: 0.3 mg/ml

### 1-2. Separating gel

Acrylamide concentration: 15%
Bisacrylamide:Acrylamide = 1:37
Gel buffer: 0.375M Tris-HCl buffer containing 0.1% sodium dodecyl sulfate and 6M urea ( pH 8.9 )
TEMED concentration: 0.125%
Ammonium persulfate concentration: 0.3 mg/ml

### 2. Migration buffer ( pH 8.3 )

| | |
|---|---|
| Sodium dodecyl sulfate | 1 g/l |
| Tris | 3 g/l |
| Glycine | 14.4 g/l |

### 3. Staining solution

| | |
|---|---|
| Coomassie Brilliant Blue | 2 g/l |
| Acetic acid | 92 ml/l |
| Methanol | 454 ml/l |

### 4. Decolorizing solution

| | |
|---|---|
| Acetic acid | 75 ml/l |
| Methanol | 250 ml/l |

### 5. Preparation of samples for electrophoresis

A mixture of 1 ml sample solution (e.g., enzyme-treated 1% isolated cow's milk-serum protein) and 1 ml of 20% trichloroacetic acid was allowed to stand at room temperature for 30 minutes and then centrifuged (1500 g, 30 minutes); the separated precipitate was suspended in 1 ml of 10% trichloroacetic acid and then centrifuged (1500 g, 30 minutes); the thus separated precipitate was dissolved in 1 ml of 0.5M Tris-HCl buffer containing 2% SDS and 6M urea (pH 8.0); this solution was boiled for two minutes; 1 ml of 0.05% Bromophenol Blue was added, and 10 µl of the solution thus prepared was used as a sample for electrophoresis.

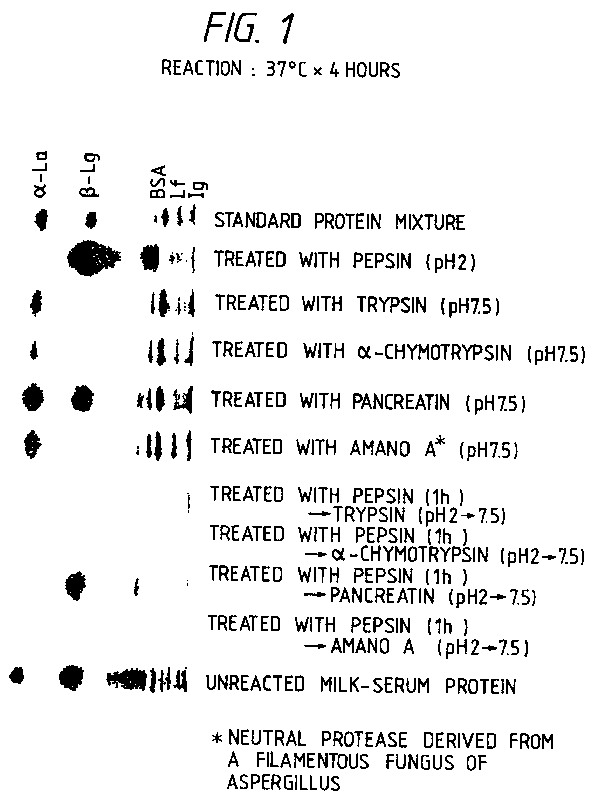

Figure 1 shows SDS-polyacrylamide gel electrophoresis patterns of milk-serum protein degraded by commerical proteases.

These patterns are the results of treatment with pepsin, trypsin, α-chymotrypsin, pancreatin, Amano A ( a protease derived from a filamentous fungus belonging to the genus Aspergillus; Amano Pharmaceutical Co., Ltd. ), and combinations of pepsin with the above proteases at 37°C for four hours at respective optimal pH levels. The figure indicates that selective degradation of β-Lg can be effected by treatment with Amano A, as well as trypsin and α-chymotrypsin. It was also found that the effective action of these proteases is nullified when the sample is pretreated with pepsin.

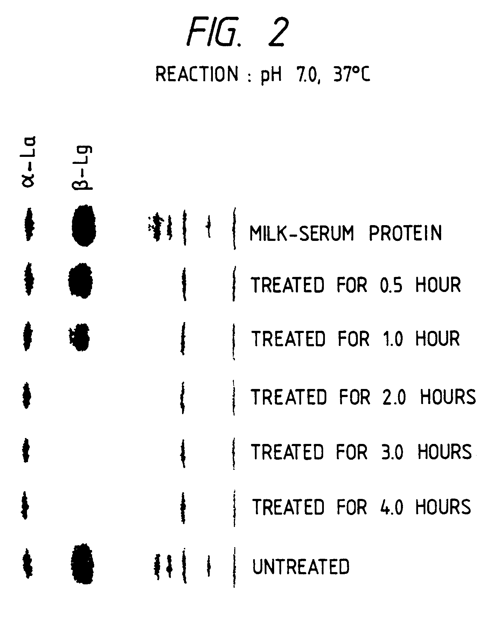

Figure 2 shows SDS-polyacrylamide gel electrophoretic patterns of milk-serum protein treated with Neutrase ( a protease derived from Bacillus sutilis; Novo Inc. ) at 35°C for four hours at pH 7.0. This clearly indicates that this protease also has the action of selectively degrading β-Lg.

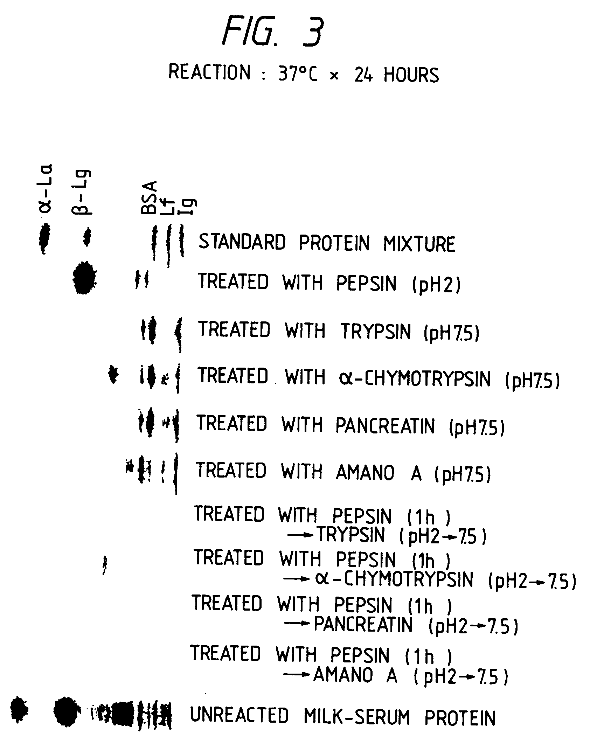

Figure 3 shows SDS-polyacrylamide gel electrophoretic patterns after the enzymatic reactions of Figure 1 are continued for 24 hours. This indicates that the action of selectively degrading β-Lg is lost when the reaction time is extended to 24 hours.

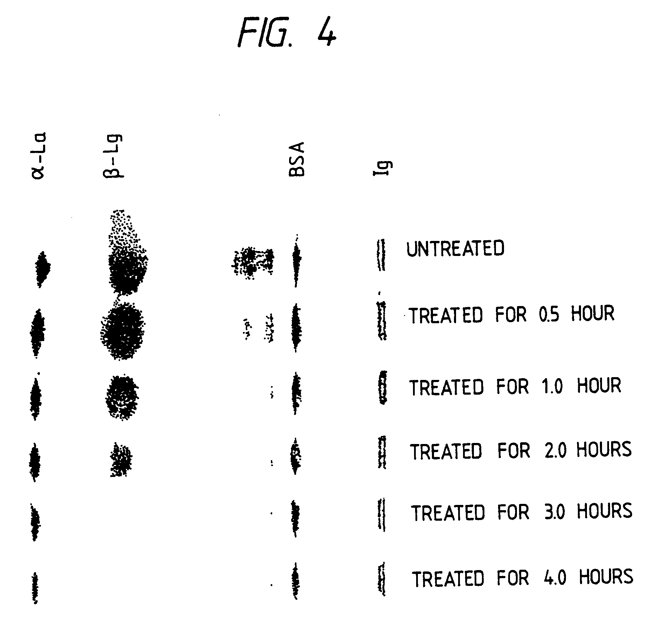

Figure 4 shows SDS-polyacrylamide gel electrophoretic patterns of milk-serum protein treated with a protease derived from Streptomyces griseus. This indicates that β-Lg can be selectively degraded when the reaction is continued for three hours.

These experiments show that treatment with an effective enzyme for a short time is essential to selective degradation of β-Lg.

In addition, the proteolytic treatment should preferably be carried out at a pH in the range of 7 to 9 and at a temperature in the range of 30 to 40°C to ensure satisfactory selective degradation. Degradation of β-Lg scarecely proceeds at a pH lower than 7, and degradation of milk-serum protein components other than β-Lg takes place at a pH lower than 5. When the pH exceeds 9, on the other hand, selective degradation of β-Lg cannot be expected. A reaction temperature lower than 30°C is unsuitable for industrial application because the rate of β-Lg degradation is significantly low, while a temperature higher than 40°C is not preferable because selective degradation of β-Lg cannot be expected.

Generally speaking, the reaction time required to obtain an intended degradation product depends on the potency of the enzyme used; the higher the potency, the shorter the reaction time, and vice versa. The unit of enzyme potency varies with the enzyme manufacturer, and even the same type of enzymes produced by a manufacturer do not always show the same potency. Hence, when enzymatic reactions are controlled by reaction time, it is necessary to use enzymes of unified potency. When using enzymes of different manufacturers, however, it is difficult to control the reactions by reaction time because of the different potency units adopted.

In practicing the method of this invention, it is preferable to determine the proper reaction time based on the amount of a degradation product released in order to avoid the influence of such variations in the enzyme potency.

When glycine is taken as the standard substance for the determination of the amount of amino compounds soluble in 10%-TCA released by degradation of milk-serum protein in SDS-polyacrylamide gel electrophoresis, the amount of the amino compounds formed reaches 220 mg and 120 mg per gram of substrate protein (when using Amano A as an enzyme, and when using trypsin or α-chymotrypsin as an enzyme, respectively) after four hours of reaction time when β-Lg is completely degraded. Degradation to about this extent maintained until a reaction time of six hours.

Twenty-four hours after the start of reaction when the action of selectively degrading β-Lg is lost, amino compounds are released in an amount corresponding to 400 mg and 170 mg glycine ( for Amano A, and trypsin or α-chymotrypsin, respectively ).

When bovine trypsin ( T-8003, Sigma Inc. ) is used as the protease, almost all β-Lg is degraded after 30 minutes by the reaction at 37°C and at pH 8.0

In the method of this invention, a protease derived from a filamentous fungus of Aspergillus ( typified by Amano A ), a protease derived from Bacillus subtilus, a protease derived from Streptomyces griseus, trypsin and α-chymotrypsin may all be used as an effective enzyme for selective degradation of β-Lg contained in cow's milk-serum protein.

In general, the enzymatic reaction should be continued for 0.5 to 20 hours at a temperature in the range of 30 to 40°C and at a pH in the range of 7 to 9.

It is necessary to trace the progress of enzymatic reaction ( degradation of β-Lg ) by measuring, using glycine as the standard substance, the amount of amino compounds soluble in 10%-TCA released by the reaction and to terminate it when the amount reaches a predetermined level. This level may vary with the type of protease used: about 220 mg per gram of substrate protein for Amano A and proteases derived from Bacillus subtilis, and about 120 mg for trypsin or α-chymotrypsin.

Described below are Examples of this invention.

### Example 1

Five liters of 1 wt% aqueous solution of isolated cow's milk-serum protein was adjusted to pH 7.5 by addition of 1N sodium hydroxide and put into a steam-sterilized jar fermentor (net capacity: 5 liters) through a large germfree filter. Separately, Amano A(a neutral protease derived from a filamentous fungus of Aspergillus; Amano pharmaceutical Co., Ltd. ) in an amount of 1% based on the weight of the above substrate protein was dissolved in a small volume of water, and this solution was put into a sterile conical flask through a small germfree filter. It was added germfree to the milk-serum protein solution placed in the jar fermentor, and the mixture was held at 37°C and at pH 7.5 with stirring. The progress of enzymatic reaction was traced, as described above, by measuring the change in the amount of amino compounds released ( by the ninhydrin colorimetric method using glycine as the standard substance ), and the reaction was terminated when 220 mg per gram of the substrate protein was released ( five hours after the start of reaction ). SDS-polyacrylamide gel electrophoresis demonstrated that this is the optimum end point for selective degradation of β-Lg.

The reaction mixture was spray-dried, giving 49 g of milk-serum protein with diminished β-Lg in which 83% of the β-Lg fraction had been degraded into low-molecular products.

### Example 2

To five liters of a 1% solution of cow's milk-serum protein prepared and placed in a jar fermentor in the same manner as in Example 1, was added a germfree aqueous solution of Neutrase(a neutral protease derived from Bacillus subtilis;Novo Inc.) in an amount of 1% by weight based on the weight of the above substrate protein, and the mixture was held at 40°C and at pH 7.0 with stirring. The progress of enzymatic reaction was traced in the same way as above, and the reaction was terminated when 220 mg per gram of the substrate protein was released ( four hours after the start of reaction ). The reaction mixture was spray-dried, giving 47 g of milk-serum protein with diminished β-Lg in which 80% of β-Lg had been degraded.

### Example 3

To five liters of a 1% solution of cow's milk-serum protein prepared and placed in a jar fermentor in the same manner as in Examples 1 and 2, was added a germfree aqueous solution of trypsin in an amount of 1% by weight based on the weight of the above substrate protein, the mixture was held at 37°C and at pH 7.5 with stirring, and the reaction was terminated when 120 mg per gram of the substrate protein was released (four hours after the start of reaction). The reaction mixture was spray-dried, giving 48 g of milk-serum protein with diminished β-Lg in which 87% of β-Lg had been degraded.

### Example 4

A mixture of 1.84 kg cow's milk-serum protein concentrate 76 (protein: 1.398 kg) and 6.63 kg cow's milk-serum protein concentrate 35 (protein: 2.231 kg) was dissolved in water, preparing 74.38 kg of a 5% aqueous solution of protein.

This solution was adjusted to pH 8.0 by addition of 10% sodium hydroxide solution, 1.2 x 10⁸ BAEE units of bovine trypsin ( T-8003; Sigma Inc. ) was then added, and the resulting mixture was held at 37°C for 90 minutes at pH 8.0 with stirring to effect the enzymatic reaction.

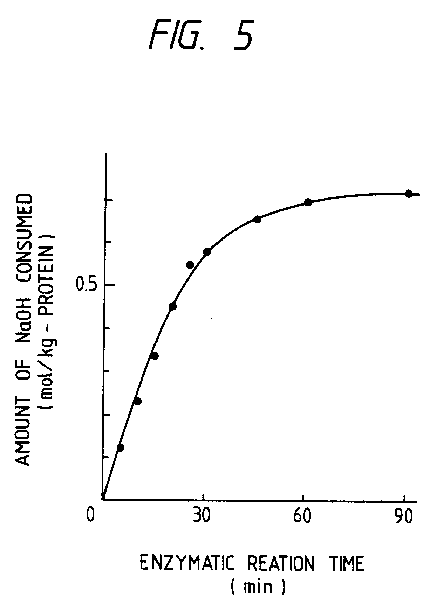

The amount of sodium hydroxide consumed was measured throughout the whole course of reaction, the result of which is shown in Figure 5. As can be seen from the figure, the reaction was put almost to completion in 90 minutes.

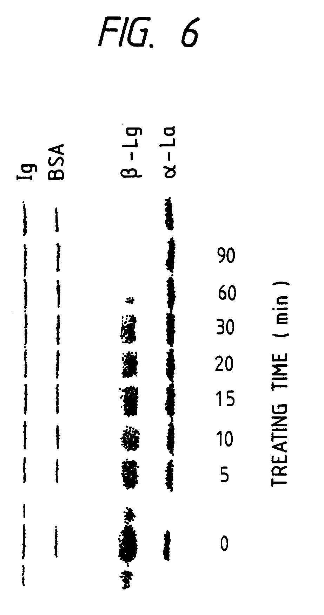

The reaction mixture was analyzed by SDS-polyacrylamide gel electrophoresis, the result of which is shown in Figure 6. It is apparent from the figure that selective degradation of β-Lg was achieved 60 minutes after the start of reaction.

### Example 5

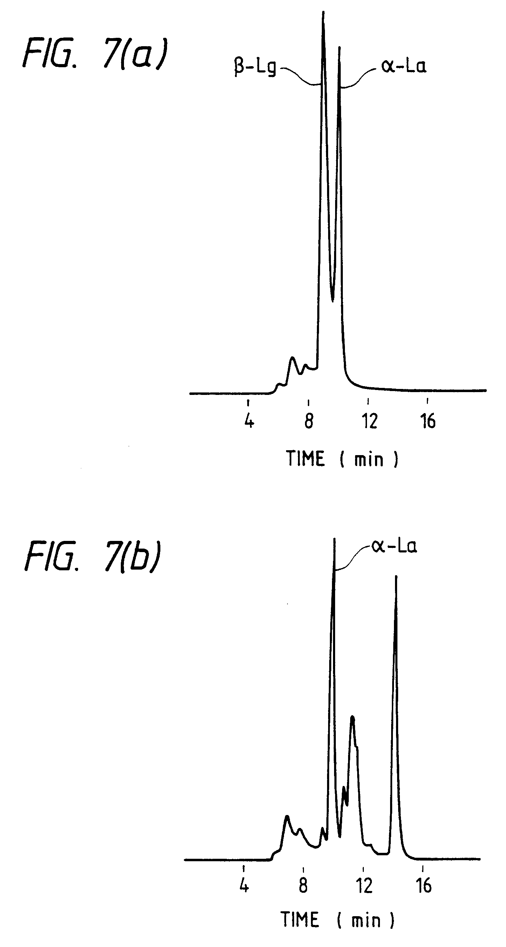

One liter of a 0.5 wt% aqueous solution of ioslated cow's milk-serum protein was adjusted to pH 8.0 by addition of 1N sodium hydroxide; bovine trypsin ( T-8003; Sigma Inc. ) was then added in an amount of 2.5 x 10⁴ BAEE unit/g of the isolated cow's milk-serum protein, and the reaction was carried out at 37°C and at pH 8.0 for two hours with stirring. The reaction mixture and unreacted mixture ( both 20 µl ) were each subjected to HPLC ( high performance liquid chromatography ) under the following conditions:
Column: TSK G2000 SWXL (Tosoh Corp. )
Mobile phase: 50mM sodium phosphate buffer containing 0.1M sodium sulfate ( pH 6.8 )
Flow rate: 1 ml/min
Detection: UV absorption ( λ = 280 nm )
Sample concentration: 0.5% for the isolated cow's milk-serum protein; 0.45% as whey protein
Sample volume: 20 µl
Column temperature: 25°C
Chromatograms obtained are shown in Figure 7 [ (a): unreacted mixture; (b): reaction mixture ]. As can be seen from the figure, β-Lg was selectively degraded completely by treatment with bovine trypsin ( T-8003; Sigma Inc. ) for two hours.

### Example 6

PCA reaction (I. Mota and D. Wong, 1969, Life Science, 8, 813) was used in this experiment to confirm (1) selective degradation of β-Lg and (2) survival of α-lactalbumin (referred to as α-La hereinafter) after the antigen-antibody reaction.

### 1. Preparation of protein-containing samples

One liter of a 1 wt% aqueous solution of isolated cow's milk-serum protein was adjusted to pH 8.0 by addition of 1N sodium hydroxide, bovine trypsin (T-8003; Sigma Inc.) was then added in an amount of 10⁴ BAEE unit/100 mg of the isolated cow's milk-serum protein, and the reaction was carried out at 37°C and at pH 8.0 for two hours with stirring. The reaction mixture thus obtained and the unreacted mixture were used as protein-containing samples.

### 2. Passive cutaneous anaphylaxis ( PCA )

Male rats of 7-week age with the back hairs shaved off were used as test animals.

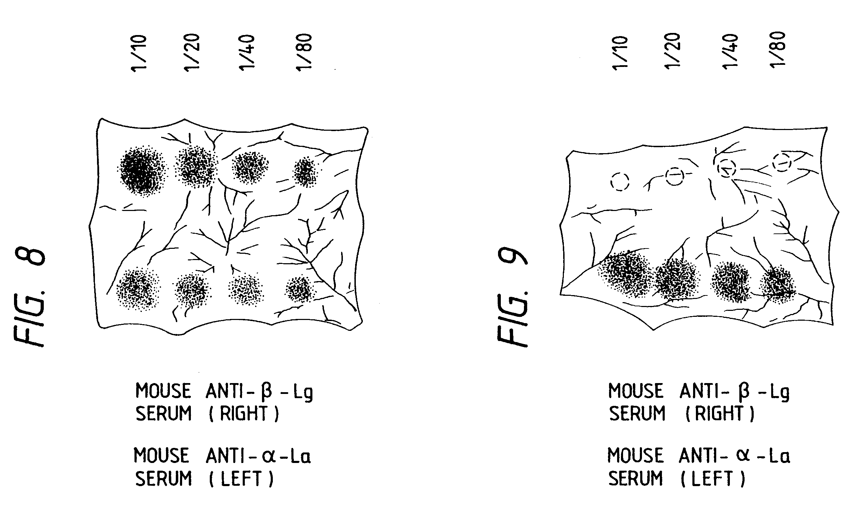

Separately, mouse anti-β-Lg serum and mouse anti-α-La serum were each diluted with 10mM sodium phosphate buffer containing 0.15M sodium chloride (phosphate-buffered saline: PBS), preparing doubling dilutions ( 1/10, 1/20, 1/40, 1/80 ) for both. Each of the dilutions ( 50 µl ) thus prepared was intradermally injected to the back of a rat, and the rat was thus passively sensitized for 24±2 hours. 1% Evans' Blue solution (0.5 ml) containing the protein-containing sample (protein content: 1 mg) prepared above was then injected at the caudal vein, the rat was killed 30 minutes later, and bluing spots were observed after peeling off the back skin. The result is summarized in Figures 8 and 9 ( Figure 8: unreacted mixture; Figure 9: reaction mixture ).

Figure 8 indicates that the unreacted mixture contains both α-La and β-Lg in large amounts, and Figure 9 shows that the reaction mixture contains a large amount of α-La and only a small amount of β-Lg left undegraded.

### Example 7

The neutralization PCA method was used in this experiment to confirm (1) selective degradation of β-Lg and (2) survival of α-La after the antigen-antibody reaction.

### 1. Preparation of protein-containing samples

The reaction mixture and the unreacted mixture prepared in the same way as in Example 6 were used as protein-containing samples.

### 2. Neutralization PCA method

Male rats of 7-week age with the back hairs shaved off were used as test animals.

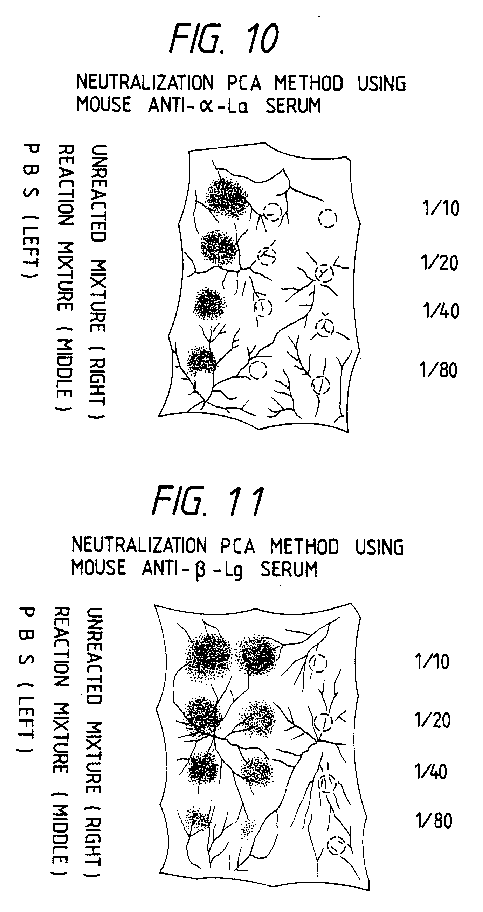

Separately, each of the samples containing 200 µg whey protein or PBS was mixed with an equal volume of mouse anti-β-Lg serum or mouse anti-α-La serum, the mixture was held at 25°C for two hours to effect neutralization, and the neutralized soltuion was diluted to prepare doubling dilutions ( 1/10, 1/20, 1/40, 1/80 ). Each of the dilutions ( 50 µl ) thus prepared was intradermally injected to the back of a rat, and the rat was thus passively sensitized for 24±2 hours. 1% Evans' Blue solution ( 0.5 ml ) containing 1 mg of β-Lg or α-La was then injected at the caudal vein, the rat was killed 30 minutes later, and bluing spots were observed after peeling off the back skin. The result is summarized in Figures 10 and 11. Figure 10 is the result of neutralization with mouse anti-α-La followed by the antigen-antibody reaction with α-La, while Figure 11 is the result of neutralization with mouse anti-β-Lg followed by the antigen-antibody reaction with β-Lg.

Figure 10 indicates that a large amount of α-La is contained in both the reaction mixture and unreacted mixture, and Figure 11 shows that little β-Lg is scarcely contained in the reaction mixture.

### Effects Achieved by the Invention

In the method of this invention, milk-serum protein components other than β-Lg(e.g.,α-La, immunoglobulins and cow's serum albumin ) are scarcely degraded, with only β-Lg being selectively degraded into low-molecular polypeptides having no allergenic action and showing no disagreeable taste, such as bitterness. The final product retains the emulsifying property of the original milk because the protein components other than β-Lg are left undegraded, and is more easily digested and absorbed when taken in orally because indigestible β-Lg has been already degraded. With these advantages, the product obtained by the method of this invention is of great value as a food material for infant nursing.

## Claims

1. Method of selectively degrading β-lactoglobulin contained in cow's milk-serum protein while not degrading other milk proteins, comprising adding a protease which is at least one member selected from the group consisting of proteases derived from filamentous fungi belonging to the genus Aspergillus, Bacillus subtilis and actinomyces, and trypsin and α-chymotrypsin, the enzymatic reaction being continued until the degradation of the β-lactoglobulin is complete and being discontinued prior to the time that degradation of other milk proteins commences, wherein the enzymatic reaction is continued at from 30 to 40°C for from 0.5 to 20 hours in the pH range of from 7 to 9.

2. Method according to claim 1, wherein the degradation of β-lactoglobulin continues to an extent corresponding to a release of amino compounds soluble in 10% trichloroacetic acid which reaches an amount corresponding to 220 mg of glycine per g of substrate protein when the protease derived from a filamentous fungus of Aspergillus, Bacillus subtilis or Streptomyces griseus is used, and an amount corresponding to 120 mg of glycine when trypsin or α-chymotrypsin is used.

## Patentansprüche

1. Verfahren zum selektiven Abbau von β-Lactoglobulin, das im Serumprotein von Kuhmilch enthalten ist, während die anderen Milchproteine nicht abgebaut werden, umfassend die Zugabe einer Protease, die wenigstens ein Glied ist, ausgewählt aus der Gruppe, bestehend aus den Proteasen, die sich von Fadenpilzen ableiten, die zur Gattung Aspergillus, Bacillus subtilis und Actinomyces gehören, und Trypsin und α-Chymotrypsin, wobei die enzymatische Reaktion fortgesetzt wird, bis der Abbau des β-Lactoglobulins vollständig ist, und beendet wird, bevor die Zersetzung der anderen Milchproteine beginnt, bei dem die enzymatische Reaktion bei 30 bis 40 °C 0,5 bis 20 Stunden lang im pH-Bereich von 7 bis 9 durchgeführt wird.

2. Verfahren nach Anspruch 1, bei dem der Abbau von β-Lactoglobulin bis zu einem Ausmaß abläuft, das einer Freisetzung von Aminoverbindungen entspricht, die in 10 % Trichloressigsäure löslich sind, das eine Menge, die 220 mg Glycin pro g Substratprotein entspricht, erreicht, wenn die Protease, die sich von einem Fadenpilz von Aspergillus, Bacillus subtilis oder Streptomyces griseus ableitet, verwendet wird, und eine Menge, die 120 mg Glycin entspricht, erreicht, wenn Trypsin oder α-Chymotrypsin verwendet wird.

## Revendications

1. Procédé pour dégrader sélectivement la β-lactoglobuline contenue dans du sérum protéinique de lait de vache, sans dégrader les autres protéines du lait comprenant l'addition d'une protéase qui est, au moins, une partie sélectionnée dans le groupe des protéases dérivées des champignons filamenteux appartenant aux genres Aspergillus, Bacillus subtilis et actinomyces et trypsine et α-chymotrypsine, la réaction enzymatique étant continuée jusqu'à la dégradation complète de la β-lactoglobuline et étant discontinue avant que le temps de dégradation des autres protéines du lait commence, la réaction enzymatique étant effectuée à une température de l'ordre de 30 à 40°C et durant un laps de temps compris entre 0,5 et 20 heures à un pH de l'ordre de 7 à 9.

2. Procédé, selon la revendication 1, caractérisé en ce qu'on effectue la dégradation de la β-lactoglobuline par une addition correspondant à une libération de composés amino solubles dans 10% d'acide trichloroacétique dans une proportion de 220mg de glycine par g, d'un substrat protéinique lorsque la protéase dérivée des champignons filamenteux d'Aspergillus, de Bacillus subtilis ou de streptomyces gris eus est usée et dans une proportion correspondant à 120mg de glycine lorsque la trypsine ou α-chymotrypsine est usée.
